# EUROPÄISCHE PATENTSCHRIFT

(11) **EP 1 747 358 B1**
(45) Veröffentlichungstag und Bekanntmachung des Hinweises auf die Patenterteilung: **27.07.2016**
(21) Anmeldenummer: 05734137.2
(22) Anmeldetag: 01.04.2005
(51) Int. Cl.: F01N 13/18

(54) **FLEXIBLES LEITUNGSELEMENT FÜR ABGASLEITUNGEN**
FLEXIBLE PIPE ELEMENT FOR EXHAUST PIPES
ELEMENT DE CONDUITE FLEXIBLE POUR COLLECTEURS D'ECHAPPEMENT

(30) Priorität: 21.05.2004 DE 202004008089 U
(43) Veröffentlichungstag der Anmeldung: 31.01.2007
(73) Patentinhaber: Witzenmann GmbH, 75175 Pforzheim (DE)
(72) Erfinder: BURKHARDT, Carlo, 75331 Grunbach (DE); RÖSLER, René, 76137 Karlsruhe (DE)
(74) Vertreter: Lemcke, Brommer & Partner Patentanwälte Partnerschaft mbB
(86) Internationale Anmeldenummer: PCT/EP2005/003424
(87) Internationale Veröffentlichungsnummer: WO 2005/113957

(56) Entgegenhaltungen:
- EP-A1- 1 238 226
- DE-U1- 20 214 234
- DE-U1- 29 503 927
- US-A- 5 456 291
- US-A- 6 116 287

## Beschreibung

Die Erfindung betrifft ein flexibles Leitungselement für Abgasleitungen von Verbrennungsmotoren bei Kraftfahrzeugen mit einem mit zylindrischen Anschlussenden versehenen, schraubengangförmig oder ringgewellten Balg aus Metall und einem den Balg unmittelbar umgebenden Gestrickeschlauch, wobei Balg und Gestrickeschlauch endständig zur Bildung der Anschlussenden des Leitungselements miteinander verbunden sind, wobei das Leitungselement mit einer sich in der Gestrickeebene erstreckenden axialen Längenreserve versehen ist, wobei die Maschen des Gestrickeschlauches durch axiales Abstauchen von einer Strecklage in eine die axiale Längenreserve aufweisende mittlere, von der Strecklage entfernte Lage gebracht sind.

Flexible Leitungselemente sind beispielsweise aus der DE-U 295 03 927.2 bekannt und werden in der Regel als Zwischenstück in die im übrigen weitgehend starre Abgasleitung eingebaut, um Bewegungen und Schwingungen, die von der elastisch gelagerten Antriebsmaschine, Erschütterungen des Fahrzeugs, temperaturbedingten Längenänderungen etc. herrühren, aufzunehmen und von der Weiterleitung an benachbarte Bauteile abzukoppeln. Neben der Eigenschaft der Flexibilität gilt die Aufmerksamkeit bei der Gestaltung derartiger Leitungselemente der Frage der Wärmedämmung, der Schallabsorption und der Dichtigkeit gegen Austritt von Abgasen.

Indem bei den bekannten Leitungselementen der Balg auf seiner radialen Außenseite mit dem als Dämpfungselement dienenden Gestrickeschlauch versehen ist, wird im Gegensatz zu einer Bauform mit den Balg auf seiner radialen Außenseite umgebendem Metalldrahtgeflecht die Eigenschaft des Gestrickeschlauches ausgenutzt, dass sich die Maschen des Gestrickes bei Längenänderungen des Balgs in Axialrichtung des Leitungselementes ineinander verschieben können und so ein dauerhaftes Anliegen des Gestrickeschlauches am Balg und demgemäß eine dauerhafte Dämpfung des Balgs -selbst bei kurzzeitig gestauchtem Bauteil- erzielt wird.

In der Regel werden die bekannten Leitungselemente dadurch hergestellt, dass der Gestrickeschlauch in vorgefertigtem Zustand auf den ebenfalls bereits fertig konfektionierten Balg aufgezogen und an den beiden Balganschlussenden festgelegt wird. Diese Art der Montage führt jedoch dazu, dass die Dehnungsfähigkeit des sich durch das Aufziehen in Strecklage befindlichen Gestrickeschlauches in axialer Zugrichtung zu gering ausfällt verglichen mit der Dehnungsfähigkeit des Balgs bzw. mit den Anforderungen an die Dehnungsfähigkeit des Balgs.

Aus der US 5,456,291 ist bekannt, einen Gestrickemantel durch radiales Umformen in den Bereich zwischen den Außenkrempen eines Balgs einzuziehen, was ebenfalls in nachteiliger Weise zu der genannten Strecklage des Gestrickes führt.

Um eine Beschädigung des Gestrickeschlauches zu vermeiden, wurde in der DE 202 14 234 U1 bereits vorgeschlagen, den Gestrickeschlauch mit einer axialen Längenreserve in Form von radialen Querschnittserweiterungen zu versehen, die sich ringwulstförmig über den Umfang des Leitungselement erstrecken. Im Bereich dieser Ringwulst liegt dann der Gestrickeschlauch nicht -wie im restlichen Bereich- am Balg bzw. dessen Außenkrempen an und bietet somit eine sich bei übermäßigen Längenänderungen des Leitungselements in Axialrichtung streckende bzw. dehnende Falte des Gestrickeschlauches, die sich bei Entlastung des Leitungselements und Rückstellung in Druckrichtung wieder ausbildet und somit dauerhaft zu Verfügung steht.

Aus der US 6,116,287 ist bei flexiblen Leitungselementen mit Wickelschläuchen in Form von Agraff-Linern zur Vermeidung einer Dämpfungsbeeinträchtigung, insbesondere durch thermische Versteifung, bekannt, das Leitungselement mit zwei koaxialen Linern zu versehen. Eine Bedämpfung mittels Gestricke ist dort allerdings nicht vorgesehen.

Die nachveröffentlichte EP 1 238 226 A1 zeigt ein gattungsgemäßes flexibles Leitungselement.

Hiervon ausgehend liegt die Aufgabe der vorliegenden Erfindung darin, ein weiter verbessertes flexibles Leitungselement der eingangs genannten Art zur Verfügung zu stellen, bei dem der Gestrickeschlauch eine axiale Längenreserve aufweist, aber dennoch gleichmäßig über seine gesamte Länge am Balg bzw. an dessen Außenkrempen anliegt, um die vollständige axiale Länge des Balgs zu bedämpfen und somit in allen Balgbereichen auftretende Schwingungen (insbesondere Eigenresonanzen) abschwächen zu können.

Diese Aufgabe wird erfindungsgemäß bei einem flexiblen Leitungselement der genannten Art dadurch gelöst, dass der Gestrickeschlauch vor und/oder nach dem Montieren auf den Balg in axialer Druckrichtung gestaucht ist und beim Abstauchen hinsichtlich seiner axialen Länge in der Größenordnung von etwa 10% gekürzt wird. Hierdurch ergibt sich der wesentliche Vorteil, dass der Gestrickeschlauch auch im Bereich seiner Längenreserve am Balg anliegt und somit kein Balgbereich unbedämpft bleibt. Somit muss man das flexible Leitungselement nicht zuvor im Hinblick auf die Position etwaiger Eigenmoden auslegen, um in Anpassung daran die radialen Ausbauchungen bzw. Querschnittserweiterungen des Standes der Technik vorzusehen.

Für eine sich in der Gestrickeebene erstreckende Längenreserve gibt es verschiedene Ausführungsformen: So könnte man sich theoretisch vorstellen, das Gestricke so locker bzw. mit so bauchigen Maschen zu stricken, dass es ausreichend Dehnungsmöglichkeiten in Zugrichtung aufweist; allerdings könnte hierunter die Dämpfungseigenschaft des Gestrickes leiden, wenn die dauerhafte Anlage des zu lockeren Gestrickeschlauches am Balg nicht hundertprozentig gewährleistet werden könnte.

Eine andere demgegenüber verbesserte Möglichkeit, die erfindungsgemäß realisiert ist, besteht darin, dass der Gestrickeschlauch vor und/oder nach dem Montieren auf den Balg in axialer Druckrichtung gestaucht ist, sodass er aus seiner nach dem Fertigstellen des Gestrickeschlauchs normalerweise vorhandenen Strecklage, die kaum noch axiale Längenreserve in Zugrichtung besitzt, etwas -beispielsweise in der Größenordnung von 10%, bezogen auf die Gesamtlänge- in axiale Druckrichtung zusammen geschoben wird und so diese 10%-ige Längenreduzierung nach dem Einbau des flexiblen Leitungselements als axiale Längenreserve in Zugrichtung zur Verfügung stellen kann. An dieser Stelle sei angemerkt, dass bei bestimmten Leitungselement-Bauformen bereits Längenreduzierungen von einigen wenigen Prozent (beispielsweise von ca. 3%) ausreichen können, um die jeweils erforderlichen Längenreserven zu bilden.

Am einfachsten zu kontrollieren ist die axiale Verkürzung des Gestrickeschlauches dann, wenn der Gestrickeschlauch zusammen mit dem Balg nach dem gegenseitigen Festlegen im Bereich der Anschlussenden gestaucht wird, da im Anschluss an diesen Stauchvorgang bei der weiteren Montage in der Regel keine weiteren Relativbewegungen zwischen Gestrickeschlauch und Balg mehr auftreten. In diesem Zusammenhang ist es von besonderem Vorteil, den Balg, der üblicher Weise nach dem Einbringen der Balgwellen ohnehin noch auf die End-Nennlänge abgestaucht werden muss, gleichzeitig mit dem Stauchen des Gestrickes zu verkürzen, sodass der ohnehin erforderliche Arbeitsgang des Abstauchens des Balges in vorteilhafter Weise automatisch auch zu dem Einbringen der erfindungsgemäßen Längenreserve in den Gestrickeschlauch führt. Mit anderen Worten erhält man dadurch, dass das Abstauchen des Balges erst nach Aufziehen des Gestrickeschlauches erfolgt, ohne weiteren zusätzlichen Arbeitsschritt oder Montageaufwand ein flexibles Leitungselement mit auf Nennlänge gebrachtem Balg und mit diesen Balg umgebenden und mit einer axialen Längenreserve versehenen Gestrickeschlauch.

Somit werden erfindungsgemäß die Maschen des Gestrickeschlauches durch das axiale Abstauchen von einer Strecklage bzw. Zuganschlaglage in eine eine axiale Längenreserve aufweisende mittlere, d.h. von der Strecklage entfernte Lage (die nicht unbedingt der Mitte zwischen Maschenkopf und Maschenfuß entsprechen muss) gebracht, wobei sich die Maschen in der Gestrickeebene zu einander verschieben, sodass der Gestrickeschlauch auch nach dem Abstauchen über seine gesamte Länge am Balg zumindest im Bereich dessen radialer Außenkrempen anliegt.

Was den genauen Aufbau des Gestrickeschlauches betrifft, so ist dieser in üblicher Weise mit Ω-förmigen Maschen aus einem Metalldraht als Maschenfaden hergestellt, wobei sich der Maschenfaden in Querrichtung der Maschen sowie im wesentlichen in radialer Umfangsrichtung des Leitungselementes erstreckt. Neben den Ω-förmigen Maschen sind aber auch andere hinterschnittene Maschenformen -beispielsweise mit U-förmigen abgekanteten Verlauf- möglich. Hierbei empfiehlt es sich, dass die Maschen in Form einer Fadenschleife ausgebildet sind, sodass die Fadenschleifen an oberen und unteren Umkehrstellen durch benachbarte Fadenschleifen in der Form gehalten sind. Insgesamt ist damit vorgesehen, dass bei einer aus oberem Maschenkopf, seitlichen Maschenschenkeln und unteren Maschenfüßen bestehenden Masche und bei einer aus mehreren nebeneinander angeordneten Maschen bestehenden Maschenreihen die Maschen einander benachbarter übereinander angeordneter Maschenreihen sich derart im Bereich von Bindungsstellen überlappen, dass sich der Maschenkopf einer Masche der einen Reihe bis auf die Höhe der Maschenschenkel einer Masche der jeweils anderen Maschenreihe erstreckt.

Während also bisher -im Extremfall- der Maschenkopf einer Masche bei sich in Strecklage befindlichem Gestrickeschlauch die benachbarte Masche nur im Bereich der Maschenfüße überlappt, sorgt das Abstauchen des Gestrickeschlauches in Druckrichtung für ein Verschieben des Maschenkopfes relativ zur anderen Masche derart, dass die oberen Bindungsstellen des Maschenkopfes nun nicht mehr im Bereich der Maschenfüße liegen, sondern bei Verschieben "nach oben" in den Bereich der Maschenschenkel wandern. Es ist unschwer erkennbar, dass bei einer Zugbeanspruchung des flexiblen Leitungselements der Maschenkopf diese beschriebene Wanderbewegung wieder in umgekehrter Richtung durchführen kann, bis er sich im Bereich der Maschenfüße der benachbarten Masche wieder in Strecklage befindet.

Weitere Merkmale und Vorteile der vorliegenden Erfindung ergeben sich aus der nachfolgenden Beschreibung eines Ausführungsbeispiels anhand der Zeichnung hierbei zeigen
- Figur 1: ein erfindungsgemäßes flexibles Leitungselement mit ausschnittsweise vergrößertem Gestrickeschlauch in Seitenansicht vor dem Abstauchen;
- Figur 2: das Leitungselement aus Figur 1 nach dem Abstauchen.

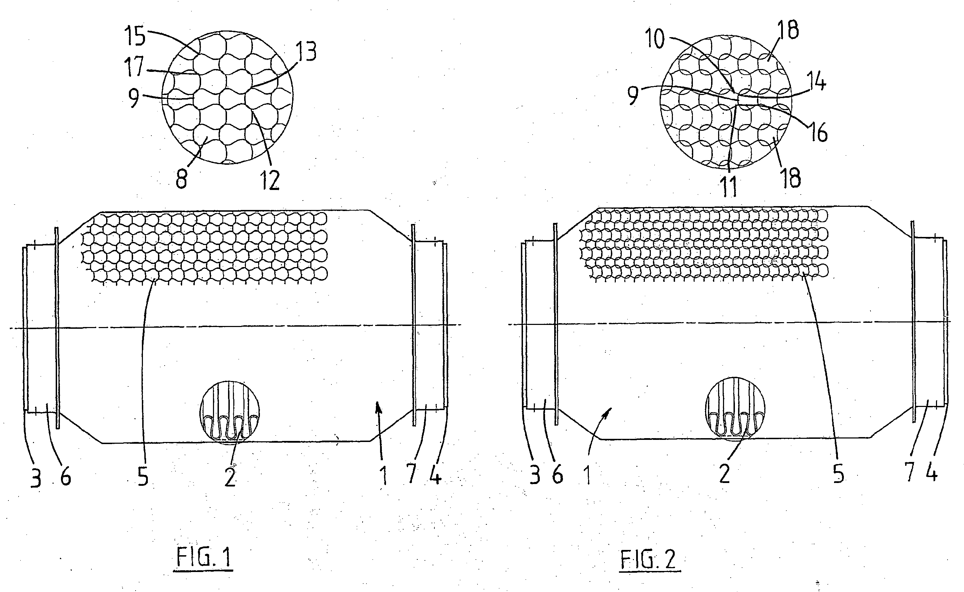

Das in Figur 1 dargestellte Leitungselement 1 besteht aus einem ringgewellten Metallbalg 2 mit zylindrischen Anschlussenden 3, 4 und einem diesen Metallbalg auf der radialen Außenseite umgebenden, sich koaxial zum Balg erstreckenden und über die gesamte Länge am Balg im Bereich dessen Außenkrempen anliegenden Gestrickeschlauch 5, wobei der Gestrickeschlauch im Bereich der Anschlußenden 3, 4 der Außenquerschnittsreduzierung des Balgs folgend in Richtung eines kleineren Außendurchmessers nach innen gezogen ist und dort über Endringe 6, 7 an den Anschlussenden (insbesondere durch Schweißen) festgelegt ist.

In Figur 1 ist oberhalb des Leitungselements 1 ein Vergrößerungsausschnitt dargestellt, in welchem die Form einzelner Maschen 8 des Gestrickeschlauches 5 besser erkennbar ist: Eine Ω-förmige Masche weist hierbei einen oberen Maschenkopf 9, seitliche Maschenschenkel 10, 11 und untere Maschenfüße 12, 13 auf, wobei der obere Maschenkopf 9 im Bereich von Bindungsstellen 14, 15, 16, 17 darüber angeordnete Maschen im Bereich deren Maschenfüße überlappt.

Das Leitungselement 1 aus Figur 1 zeigt denjenigen Zustand, wie er nach dem Aufziehen des Gestrickeschlauches 5 auf den Balg 2 und dem Festlegen der beiden Leitungsbauteile im Bereich der Anschlussenden mit Hilfe der Endringe 6, 7 vorliegt. Da der Balg 2 jedoch erst noch auf seine Nennlänge gebracht werden muss, wird das gesamte Leitungselement 1 abgestaucht, d.h. in axialer Druckrichtung zusammengedrückt, und stellt sich aufgrund der elastischen Verformung des Leitungselements aus dem zusammengedrückten Zustand wieder etwas zurück in einen in Figur 2 dargestellten Endzustand, der etwa 10% kürzer ist als der in Figur 1 dargestellte Ausgangszustand.

In Figur 2 und insbesondere in der darüber angeordneten Ausschnittsvergrößerung erkennt man gut, wie sich die Maschen 8 in Axialrichtung ineinander verschoben haben, wobei insbesondere die sich in Umfangsrichtung des Leitungsefements erstreckenden Maschenreihen 18 jeweils relativ in Richtung der benachbarten Maschenreihe verschoben haben. Hierdurch überlappen die oberen Bindungsstelien 14, 16 der Maschenköpfe 9 die darüber angeordneten Maschen im Bereich deren Maschenschenkel 10, 11 und stellen somit die erfindungsgemäße, sich in der Gestrickeebene erstreckende axiale Längenreserve zur Verfügung.

Soweit in dem vorliegenden Text von "in der Gestrickeebene erstreckend" gesprochen wird, so meint dies, dass die die Längenreserve bildenden Maschen bzw. Maschenteile nicht bzw. nur unwesentlich gegenüber den restlichen Gestrickebereichen in Radialrichtung vorstehen, um -im Gegensatz zum Stand der Technik- die Anlage am Balg auch in den Längenreserve-Bereichen zur Verfügung zu stellen.

Durch das erfindungsgemäße Leitungselement ergibt sich somit der Vorteil, dass das Leitungselement auch in Zugrichtung ausreichend dehnbar und flexibel bleibt, auf der anderen Seite aber über die gesamte Länge den innenliegenden Balg und insbesondere dessen Eigenfrequenzen bedämpft.

## Patentansprüche

1. Flexibles Leitungselement für Abgasleitungen von Verbrennungsmotoren bei Kraftfahrzeugen mit einem mit zylindrischen Anschlussenden (3, 4) versehenen, schraubgangförmig oder ringgewellten Balg (2) aus Metall und einem den Balg unmittelbar umgebenden Gestrickeschlauch (5), wobei Balg und Gestrickeschlauch endständig zur Bildung der Anschlussenden des Leitungselements (1) miteinander verbunden sind, wobei das Leitungselement (1) mit einer sich in der Gestrickeebene erstreckenden axialen Längenreserve versehen ist, wobei die Maschen (8) des Gestrickeschlauches (5) durch axiales Abstauchen von einer Strecklage in eine die axiale Längenreserve aufweisende mittlere, von der Strecklage entfernte Lage gebracht sind,
**dadurch gekennzeichnet,**
**dass** der Gestrickeschlauch (5) vor und/oder nach dem Montieren auf den Balg (2) in axialer Druckrichtung gestaucht ist und beim Abstauchen hinsichtlich seiner axialen Länge in der Größenordnung von etwa 10% gekürzt wird.

2. Flexibles Leitungselement nach zumindest Anspruch 1,
**dadurch gekennzeichnet,**
**dass** der Balg (2) nach dem Montieren des Gestrickeschlauches (5) zusammen mit diesem in Axialrichtung gestaucht ist.

3. Flexibles Leitungselement nach Anspruch 1 oder 2,
**dadurch gekennzeichnet,**
**dass** der Gestrickeschlauch (5) vor dem Abstauchen in Strecklage an den Anschlussenden (3, 4) des Balgs (2) festgelegt ist.

4. Flexibles Leitungselement nach zumindest Anspruch 2,
**dadurch gekennzeichnet,**
**dass** der Gestrickeschlauch (5) nach dem Abstauchen am Balg (2) über dessen gesamte Länge zumindest im Bereich dessen radialer Außenkrempen anliegt.

5. Flexibles Leitungselement nach zumindest Anspruch 1,
**dadurch gekennzeichnet,**
**dass** der Gestrickeschlauch (5) mit Ω-förmigen Maschen (8) aus einem Metalldraht als Maschenfaden hergestellt ist, und dass sich der Maschenfaden in Querrichtung der Maschen und in radialer Umfangsrichtung des Gestrickeschlauches erstreckt.

6. Flexibles Leitungselement nach zumindest Anspruch 4,
**dadurch gekennzeichnet,**
**dass** die Maschen (8) in Form einer Fadenschleife ausgebildet sind, sodass die Fadenschleifen an oberen und unteren Umkehrstellen durch benachbarte Fadenschleifen in der Form gehalten sind.

7. Flexibles Leitungselement nach zumindest Anspruch 1,
**dadurch gekennzeichnet,**
**dass** bei einer aus oberem Maschenkopf (9), seitlichen Maschenschenkeln (10, 11) und unteren Maschenfüßen (12, 13) bestehenden Masche (8) und bei einer aus mehreren nebeneinander angeordneten Maschen (8) bestehenden Maschenreihe (18) die Maschen einander benachbarter übereinander angeordneter Maschenreihen sich derart im Bereich von Bindungsstellen (14, 15, 16, 17) überlappen, dass sich der Maschenkopf (9) einer Masche (8) der einen Reihe (18) mit seinen jeweils oberen Bindungsstellen (14, 16) bis auf die Höhe der Maschenschenkel (10, 11) einer Masche (8) der jeweils anderen Maschenreihe (18) erstreckt.

## Claims

1. Flexible duct element for exhaust gas lines of internal combustion engines in motor vehicles, having a helically or annularly corrugated metal bellows (2) which is provided with cylindrical connection ends (3, 4) and having a knitted hose (5) which immediately surrounds the bellows, wherein the bellows and the knitted hose are joined to one another terminally to form the connection ends of the duct element (1), the duct element (1) being provided with an axial reserve length extending in the plane of the knitted material, wherein the stitches (8) of the knitted hose (5) have been brought, by axial compression, from an extended position into a central position that is remote from the extended position and has the axial reserve length,
**characterised in that**
the knitted hose (5) is compressed in the axial compression direction before and/or after being mounted on the bellows (2) and, on being compressed, undergoes a reduction in its axial length in the order of about 10 %.

2. Flexible duct element according to at least claim 1,
**characterised in that**
the bellows (2), after mounting of the knitted hose (5), is compressed together therewith in the axial direction.

3. Flexible duct element according to claim 1 or 2,
**characterised in that**
prior to compression, the knitted hose (5) is fixed in an extended position to the connection ends (3,4) of the bellows (2).

4. Flexible duct element according to at least claim 2,
**characterised in that**
the knitted hose (5), after compression, is in contact with the bellows (2) over the entire length thereof at least in the region of its radially outer folds.

5. Flexible duct element according to at least claim 1,
**characterised in that**
the knitted hose (5) is made with Ω-shaped stitches (8) from a metal wire as filament, and the filament extends in the traverse direction of the stitches and in the radial circumferential direction of the knitted hose.

6. Flexible duct element according to at least claim 4,
**characterised in that**
the stitches (8) are in the shape of a filament loop so that the filament loops are held in shape at upper and lower turning points by adjacent filament loops.

7. Flexible duct element according to at least claim 1,
**characterised in that**
in the case of a stitch (8) consisting of an upper head (9), lateral limbs (10, 11) and lower feet (12, 13) and in the case of a row (18) of stitches consisting of a plurality of stitches (8) arranged one next to the other, the stitches of adjacent rows that are arranged one above the other overlap one another in the region of interlacing points (14, 15, 16, 17) in such a way that the head (9) of a stitch (8) of one row (18) extends, with its upper interlacing points (14, 16), up to the level of the limbs (10, 11) of a stitch (18) of the respective other row (18).

## Revendications

1. Elément de conduite flexible pour tuyaux d'échappement de moteurs à combustion interne dans des véhicules automobiles, comprenant un soufflet métallique (2) hélicoïdal ou annelé, muni d'extrémités cylindriques de raccordement (3, 4), et un gainage souple tricoté (5) qui entoure directement ledit soufflet, le soufflet et le gainage souple tricoté étant reliés l'un à l'autre dans leurs régions extrêmes, en vue de former les extrémités de raccordement de l'élément de conduite (1), lequel élément de conduite (1) est pourvu d'une réserve de longueur axiale s'étendant dans le plan du tricot, sachant que les mailles (8) dudit gainage souple tricoté (5) sont amenées, par contraction axiale, d'une position déployée à une position médiane éloignée de ladite position déployée et présentant ladite réserve de longueur axiale,
**caractérisé par le fait**
**que** le gainage souple tricoté (5) est contracté dans une direction de pression axiale avant et/ou après le montage sur le soufflet (2), sa longueur axiale étant réduite de l'ordre d'environ 10 % au cours de la contraction.

2. Elément de conduite flexible selon au moins la revendication 1,
**caractérisé par le fait**
**que** le soufflet (2) est contracté dans la direction axiale, conjointement au gainage souple tricoté (5), à l'issue du montage de ce dernier.

3. Elément de conduite flexible selon la revendication 1 ou 2,
**caractérisé par le fait**
**que** le gainage souple tricoté (5) est bloqué à demeure sur les extrémités de raccordement (3, 4) du soufflet (2) en position déployée, préalablement à la contraction.

4. Elément de conduite flexible selon au moins la revendication 2,
**caractérisé par le fait**
**que** le gainage souple tricoté (5) est en applique sur le soufflet (2) à l'issue de la contraction, sur toute la longueur dudit soufflet et au moins dans la région des bords extérieurs radiaux de ce dernier.

5. Elément de conduite flexible selon au moins la revendication 1,
**caractérisé par le fait**
**que** le gainage souple tricoté (5) est produit avec des mailles (8) configurées en Ω, à partir d'un fil métallique constituant le fil de maillage ; et par le fait que ledit fil de maillage s'étend dans la direction transversale desdites mailles et dans la direction du pourtour radial dudit gainage souple tricoté.

6. Elément de conduite flexible selon au moins la revendication 4,
**caractérisé par le fait**
**que** les mailles (8) sont réalisées en tant que boucle de fil, de façon telle que la forme des boucles de fil soit entretenue, dans des zones d'inversion supérieures et inférieures, par l'intermédiaire de boucles de fil voisines.

7. Elément de conduite flexible selon au moins la revendication 1,
**caractérisé par le fait**
**qu'**en présence d'une maille (8) composée d'une tête supérieure (9), de jambages latéraux (10, 11) et de pieds inférieurs (12, 13), et en présence d'un rang (18) de mailles constitué de plusieurs mailles (8) placées en juxtaposition, les mailles de rangs mutuellement voisins disposés en superposition se chevauchent, dans la région de zones de rattachement (14, 15, 16, 17), de façon telle que la tête (9) d'une maille (8) de l'un des rangs (18) s'étende, par ses zones de rattachement (14, 16) respectivement supérieures, jusqu'à la hauteur des jambages (10, 11) d'une maille (8) de l'autre rang (18) considéré.
